# EUROPEAN PATENT APPLICATION

(11) **EP 4 726 881 A1**
(43) Date of publication of application: **15.04.2026**
(21) Application number: 25196102.5
(22) Date of filing: 14.08.2025
(51) Int. Cl.: H01M 50/209, H01M 50/30, H01M 50/507

(54) **BATTERY MODULE**

(30) Priority: 10.10.2024 KR 20240137949
(71) Applicant: SAMSUNG SDI CO., LTD., Yongin-si, Gyeonggi-do 17084 (KR)
(72) Inventor: CHO, Man Sik, 16678 Suwon-si (KR)
(74) Representative: Marks & Clerk LLP

(57) **Abstract**

A battery module includes: a housing; a plurality of battery cells accommodated in the housing and each including a case including a vent hole and a cell terminal protruding from the case; a bus bar electrically connecting the cell terminal of a battery cell of the plurality of battery cells and the cell terminal of another battery cell of the plurality of battery cells; and a bus bar holder including a holder body that supports the bus bar and includes a holder through hole corresponding to the vent hole, and a first protective member including an insulating material and located between the holder body and the case to face the case.

## Description

### BACKGROUND

### 1. Field

Aspects of embodiments of the present disclosure relate to a battery module.

### 2. Discussion of Related Art

Generally, with the recent rapid spread of electronic devices using batteries, such as mobile phones, laptop computers, and electric vehicles, the demand for secondary batteries having high energy density and high capacity has been rapidly increasing. Accordingly, research and development for improving performance of lithium secondary batteries is being actively conducted.

Secondary batteries are widely used for powering or storing energy in not only small devices, such as portable electronic devices, but also medium to large devices, such as electric vehicles and energy storage systems (ESS). In the medium to large devices, a plurality of electrically connected battery cells may configure one battery module to enhance the output and/or capacity of the secondary battery.

When the battery module is charged or discharged, flammable substances including high-temperature gas may be discharged to the outside of the battery cells due to internal abnormal reactions or external impacts, and the high-temperature gas and the flammable substances discharged from the battery cell can thermally deform a bus bar holder which supports a bus bar. If the bus bar holder is thermally deformed, a short circuit in the bus bar disposed in the bus bar holder or electronic components and a spark due to the short circuit may occur, and a large fire or explosion can be caused.

The aforementioned information disclosed in this background section is provided for enhancement of understanding of the background technology of the present disclosure, and therefore may contain information that does not constitute the related art.

### SUMMARY

According to an aspect of embodiments of the present disclosure, a battery module including a bus bar holder in which deformation and damage due to high-temperature gas and flammable substances discharged from a battery cell are suppressed is provided.

However, technical aspects and objectives to be achieved by the present disclosure are not limited to the above-described aspects and objectives, and other aspects and objectives, which are not described above, will be clearly understood by those skilled in the art through the following description of the disclosure.

According to one or more embodiments of the present disclosure, a battery module includes a housing; a plurality of battery cells accommodated in the housing and each including a case including a vent hole and a cell terminal protruding from the case; a bus bar electrically connecting the cell terminal of a battery cell of the plurality of battery cells and the cell terminal of another battery cell of the plurality of battery cells; and a bus bar holder including a holder body that supports the bus bar and includes a holder through hole corresponding to the vent hole, and a first protective member including an insulating material and located between the holder body and the case to face the case.

In other words, a battery module may be provided comprising a housing; a plurality of battery cells accommodated in the housing and each comprising a case including a vent hole and a cell terminal protruding from the case; a bus bar electrically connecting the cell terminal of a battery cell of the plurality of battery cells and the cell terminal of another battery cell of the plurality of battery cells; and a bus bar holder comprising a holder body that supports the bus bar and includes a holder through hole corresponding to the vent hole, and a first protective member comprising an insulating material and located between the holder body and the case to face the case.

The first protective member may be attached to the holder body.

The first protective member may be in (or brought into) close contact with a circumference of the vent hole of the case.

The vent hole and the holder through hole corresponding to the vent hole may be (disposed to be) aligned in a thickness direction of the holder body.

The insulating material may include (one of or) any of mica, aerogel, and a ceram ic.

The first protective member may not close the holder through hole.

The first protective member may include a first base portion (interposed) between the holder body and the case, and a first partition portion bent from the first base portion and extending in a direction away from the case, and having a cross-sectional shape of a closed curve such that (or so that) an inner circumferential surface of the holder through hole is covered.

The holder body may include a plate portion overlapping the first base portion, and a rib portion protruding from the plate portion such that (or so that) the holder through hole extends in a thickness direction of the plate portion, and extending in a direction away from the case.

The first partition portion may be in contact with the rib portion.

The battery module may further include a second protective member including an insulating material and located at an opposite side of the first protective member with the holder body therebetween.

The second protective member may include a second base portion overlapping the plate portion and attached to the plate portion.

The second protective member may further include a second partition portion bent from the second base portion and extending in a direction away from the case, and having a closed curve cross-sectional shape to surround the rib portion.

The second protective member may further include a wing portion that is connected to the second base portion and covers the bus bar.

The wing portion may be spaced apart from the holder body.

The insulating material (of the second protective member) contains one of (or comprises any of) mica, aerogel, and a ceramic.

The holder body may include a synthetic resin.

At least some of the above and other features of the invention are set out in the claims.

### BRIEF DESCRIPTION OF THE DRAWINGS

The above and other aspects, objects, features and advantages of the present disclosure will become more apparent to those of ordinary skill in the art by describing some example embodiments thereof in further detail with reference to the accompanying drawings, in which:
FIG. 1 is a perspective view of a battery module according to an embodiment of the present disclosure;
FIG. 2 is an exploded perspective view of the battery module of FIG. 1, and is a view illustrating the battery module excluding a cover;
FIG. 3 is a perspective view separately illustrating a battery cell of FIG. 2;
FIG. 4 is a cross-sectional view schematically illustrating a configuration of the battery cell of FIG. 3;
FIG. 5 is a cross-sectional view taken along the line A1-A1 in FIG. 1;
FIG. 6 is a cross-sectional view taken along the line B1-B1 in FIG. 1;
FIG. 7 is a perspective view illustrating a bus bar holder of FIG. 1 viewed from below;
FIG. 8 is an exploded perspective view of the bus bar holder of FIG. 1;
FIG. 9 is a perspective view of a battery module according to another embodiment of the present disclosure;
FIG. 10 is a cross-sectional view taken along the line A2-A2 in FIG. 9;
FIG. 11 is a cross-sectional view taken along the line B2-B2 in FIG. 9;
FIG. 12 is an exploded perspective view illustrating a bus bar holder of FIG. 9 viewed from above;
FIG. 13 is an enlarged perspective view illustrating a first protective member of FIG. 12;
FIG. 14 is an exploded perspective view illustrating the bus bar holder of FIG. 9 viewed from below;
FIG. 15 is a perspective view of a battery module according to another embodiment of the present disclosure;
FIG. 16 is a cross-sectional view taken along the line A3-A3 in FIG. 15;
FIG. 17 is a cross-sectional view taken along the line B3-B3 in FIG. 15;
FIG. 18 is a perspective view illustrating a bus bar holder of FIG. 15 viewed from below;
FIG. 19 is an exploded perspective view illustrating the bus bar holder of FIG. 15 viewed from above;
FIG. 20 is an exploded perspective view illustrating the bus bar holder of FIG. 15 viewed from below;
FIG. 21 is a perspective view of a battery module according to another embodiment of the present disclosure, and is a view illustrating that a second protective member is separated from a holder body;
FIG. 22 is a cross-sectional view taken along the line A4-A4 in FIG. 21;
FIG. 23 is a cross-sectional view taken along the line B4-B4 in FIG. 21;
FIG. 24 is a perspective view of a bus bar holder of FIG. 21 viewed from above, and is a view illustrating that a second protective member is attached to a holder body;
FIG. 25 is an exploded perspective view illustrating the bus bar holder of FIG. 21 viewed from above; and
FIG. 26 is an exploded perspective view illustrating the bus bar holder of FIG. 21 viewed from below.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

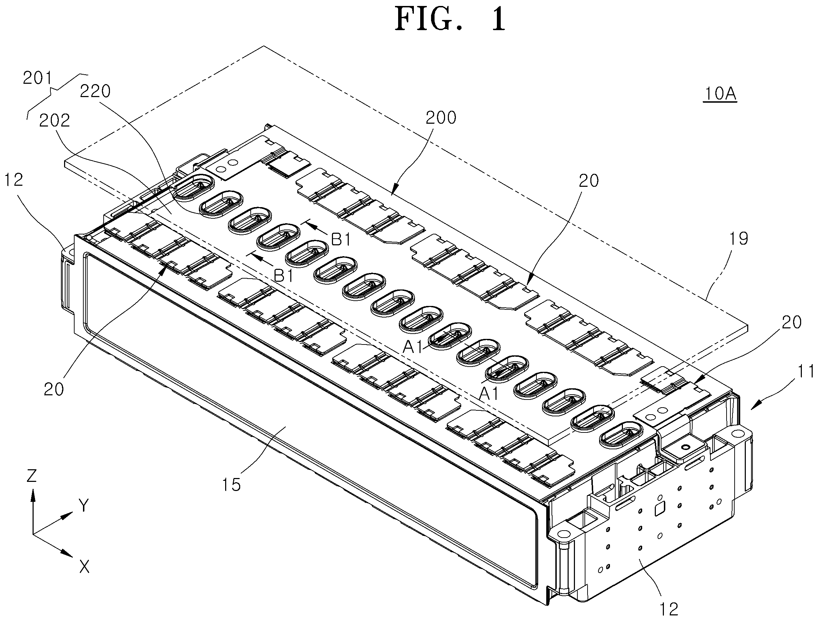

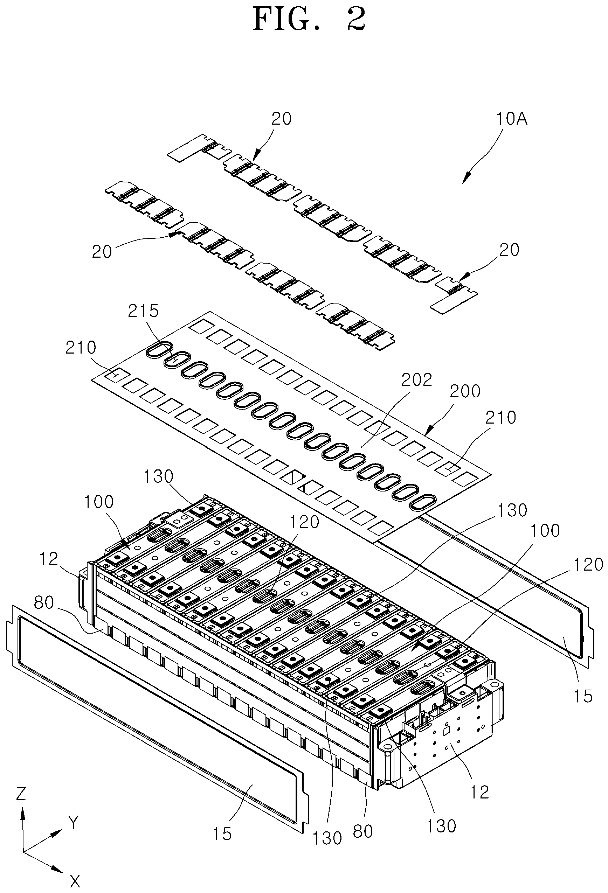

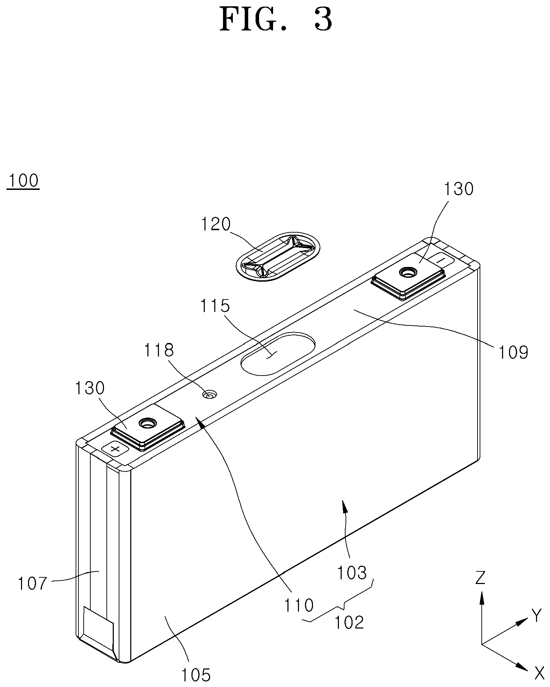

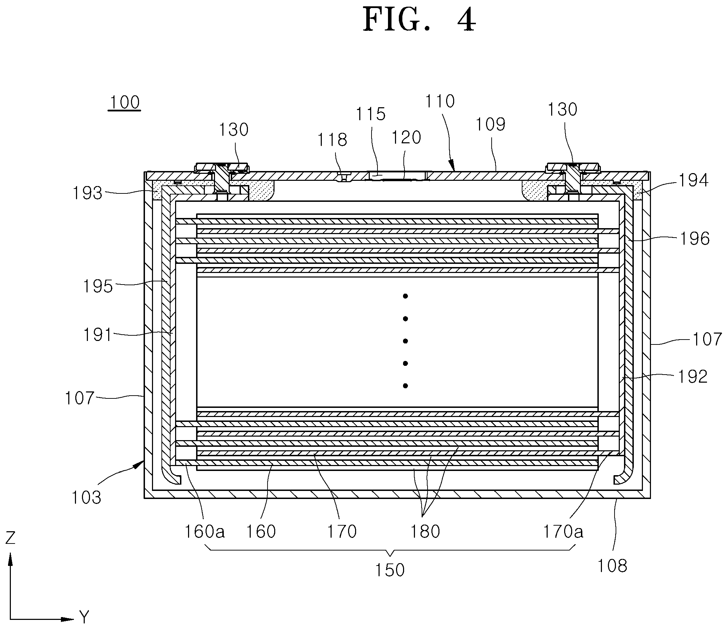

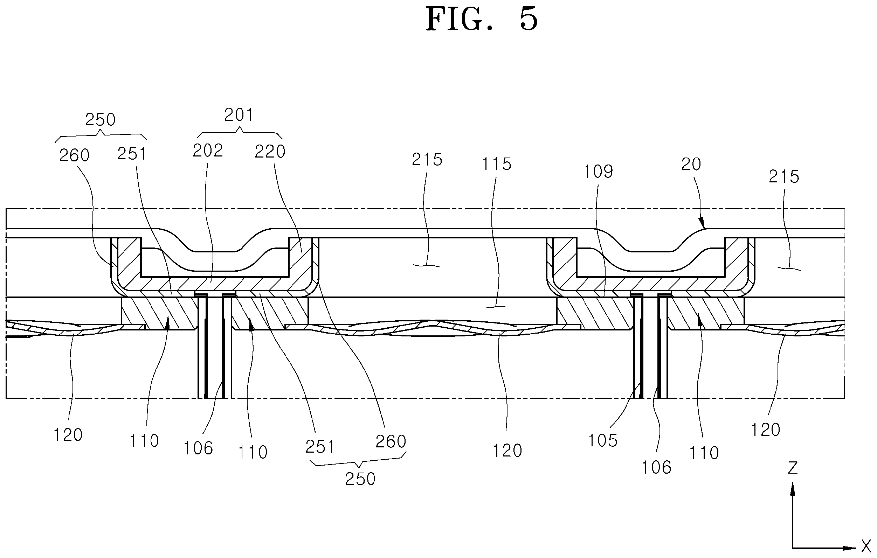

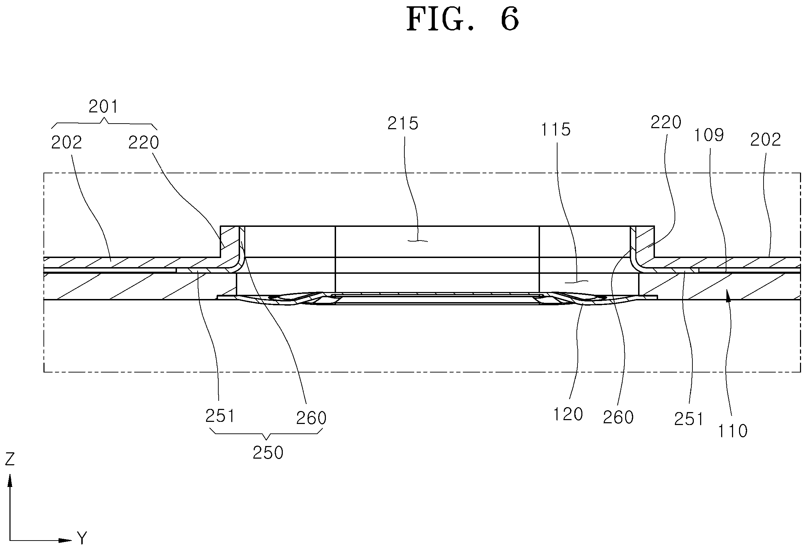

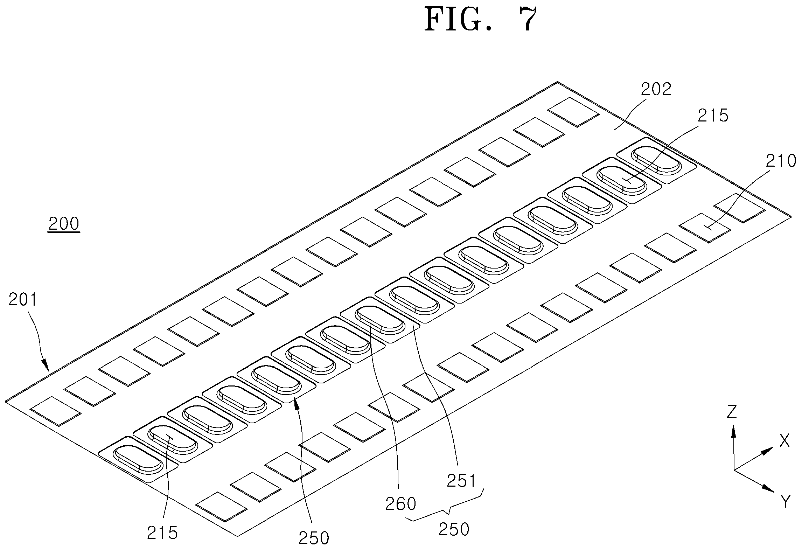

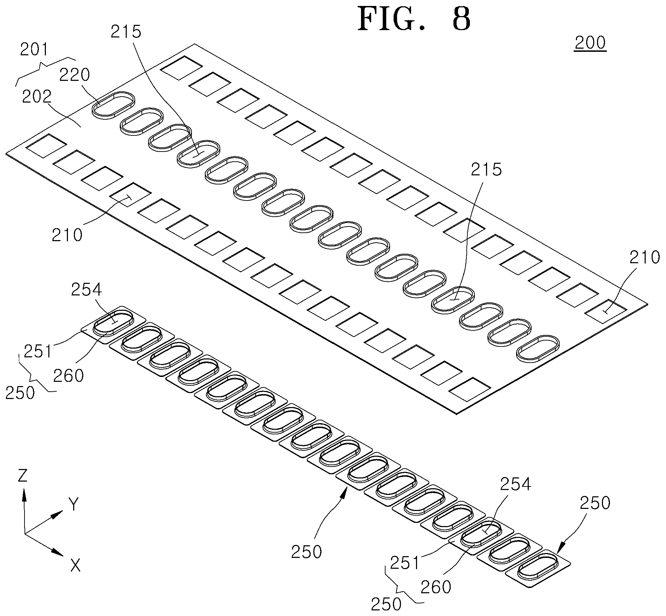

FIG. 1 is a perspective view of a battery module according to an embodiment of the present disclosure; FIG. 2 is an exploded perspective view of the battery module of FIG. 1, and is a view illustrating the battery module excluding a cover; FIG. 3 is a perspective view separately illustrating a battery cell of FIG. 2; FIG. 4 is a cross-sectional view schematically illustrating a configuration of the battery cell of FIG. 3; FIG. 5 is a cross-sectional view taken along the line A1-A1 in FIG. 1; FIG. 6 is a cross-sectional view taken along the line B1-B1 in FIG. 1; FIG. 7 is a perspective view illustrating a bus bar holder of FIG. 1 viewed from below; and FIG. 8 is an exploded perspective view of the bus bar holder of FIG. 1.

Herein, an example in which a secondary battery is a prismatic battery as a lithium-ion secondary battery will be described. However, the present disclosure is not limited thereto, and the secondary battery may be a lithium polymer battery or a cylindrical battery, for example.

Referring to FIGS. 1 to 8, a battery module 10A according to an embodiment of the present disclosure includes a housing 11, a plurality of battery cells 100, a bus bar 20, and a bus bar holder 200. The plurality of battery cells 100 may be arranged in a row along a direction, for example, along an X direction based on FIGS. 1 and 2.

In an embodiment, the housing 11 may include a pair of end plates 12, a pair of side plates 15, a cover 19, and a plurality of battery cell brackets 80. The pair of end plates 12 may be disposed to be spaced apart from each other with a plurality of battery cells 100 interposed therebetween. One end plate 12 among the pair of end plates 12 may be disposed to cover a front surface 105 of the battery cell 100 located most frontward among the plurality of battery cells 100.

The other end plate 12 among the pair of end plates 12 may be disposed to cover a rear surface 106 (see FIG. 5) of the battery cell 100 located most rearward among the plurality of battery cells 100.

The pair of side plates 15 may be disposed to be spaced apart from each other with the plurality of battery cells 100 interposed therebetween along a Y direction. The pair of side plates 15 may be disposed to respectively cover a pair of side surfaces 107 of the plurality of battery cells 100 and face each other. Front and rear end portions of the pair of side plates 15, that is, both, or opposite, side end portions in the Y direction, may be joined to both, or opposite, side end portions of the pair of end plates 12 in the Y direction by, for example, a method such as welding, applying an adhesive, or the like.

The cover 19 may cover the bus bar holder 200 such that the bus bar holder 200 and the bus bar 20 disposed on the plurality of battery cells 100 are not exposed.

The plurality of battery cell brackets 80 may be provided in a number corresponding one-to-one to the number of battery cells 100. Each of the battery cell brackets 80 may be in contact with and support a lower surface 108 (see FIG. 4) of the corresponding battery cell 100. The battery cell bracket 80 may extend in the Y direction. Both, or opposite, end portions of the battery cell bracket 80 in a longitudinal direction may be attached to and supported by the pair of side plates 15.

In FIGS. 1 to 8, a positive (+) direction and a negative (-) direction parallel to an X-axis are referred to as a first direction, a positive (+) direction and a negative (-) direction parallel to a Y-axis are referred to as a second direction, and a positive (+) direction and a negative (-) direction parallel to a Z-axis are referred to as a third direction. For example, the first direction may be a longitudinal direction of the battery module 10A, the second direction may be a width direction of the battery module 10A, and the third direction may be a height direction of the battery module 10A. The first direction may be a direction in which the plurality of battery cells 100 are arranged in a row.

Referring to FIGS. 3 and 4, the battery cell 100 may include an electrode assembly 150, a case 102, a cell terminal 130, and a cell vent 120.

The electrode assembly 150 may include a positive electrode 160, a negative electrode 170, and a separator 180 disposed between the positive electrode 160 and the negative electrode 170.

The positive electrode 160 and the negative electrode 170 may include coated portions which are regions where an active material is applied to a current collector formed of a thin metal foil plate, and uncoated portions 160a and 170a which are regions where the active material is not coated.

In an embodiment, the electrode assembly 150 may be wound in a jelly roll shape after the separator 180, which is an insulator, is interposed between the positive electrode 160 and the negative electrode 170. However, the electrode assembly 150 is not limited to this shape, and may be formed in a stacked structure in which the positive electrodes 160 and the negative electrodes 170 formed of a plurality of sheets are alternately stacked with the separator 180 therebetween.

A single electrode assembly 150 may be formed, or a plurality of electrode assemblies 150 may be provided.

The case 102 may form an overall exterior of the battery cell 100. In an embodiment, the case 102 may have a hexahedral shape having six surfaces. For example, the case 102 may have a rectangular parallelepiped shape. The electrode assembly 150 may be accommodated in the case 102.

The case 102 may include a case body 103 and a cap plate 110 which closes an open side of the case body 103. The case body 103 may include a conductive metal material, for example, such as aluminum, an aluminum alloy, or nickel-plated steel.

The cap plate 110 may be formed to have, for example, a flat plate shape. The cap plate 110 may be disposed on the case body 103 to cover the open side of the case body 103. The cap plate 110 may be coupled to the case body 103 by any of various types of coupling methods, such as welding, bolting, fitting, and the like. The cap plate 110 may be formed of a conductive material including at least one among aluminum, an aluminum alloy, and the like.

The cell terminal 130 may protrude from the case 102. For example, the cell terminal 130 may be installed to pass through the cap plate 110 and protrude outward from the cap plate 110. A pair of cell terminals 130 protruding outward from the cap plate 110 may be formed. The pair of cell terminals 130 may be individually connected to the positive electrode 160 and the negative electrode 170 of the electrode assembly 150. Accordingly, the pair of cell terminals 130 may respectively function as a positive electrode terminal and a negative electrode terminal of the battery cell 100.

For example, the cell terminals 130 may be electrically connected to a first current collector 191 (herein, referred to as a positive electrode current collector) and a second current collector 192 (herein, referred to as a negative electrode current collector) joined to a positive electrode uncoated portion 160a or a negative electrode uncoated portion 170a by welding. For example, the pair of cell terminals 130 may be respectively joined to the positive electrode current collector 191 and the negative electrode current collector 192 by welding. However, the present disclosure is not limited thereto, and the cell terminals 130 and the current collectors 191 and 192 may be formed to be integrally joined, for example.

The cap plate 110 may further include an electrolyte inlet 118 in which a sealing stopper (not shown) may be installed. The cap plate 110 may further include a vent hole 115.

The vent hole 115 may be a through hole passing through the cap plate 110 in a thickness direction. The vent hole 115 may provide a path through which high-temperature gas and flammable substances formed inside the case 102 are discharged from the battery cell 100 if thermal runaway of the battery cell 100 occurs.

The cell vent 120 may be opened and closed in response to a change in internal pressure of the case 102. The cell vent 120 may maintain a closed state to seal the case 102 during the normal operation of the battery cell 100. The cell vent 120 may be opened when the internal pressure of the cell case 200 rises above a certain magnitude (e.g., a set magnitude) due to overcharging of the battery cell 100, an occurrence of fire, or the like. Accordingly, the high-temperature gas and the flammable substances generated inside the case 102 may be discharged to the outside of the case 102.

Insulating members 193 and 194 may be installed between the electrode assembly 150 and the cap plate 110. The insulating members 193 and 194 may include a first lower insulating member 193 and a second lower insulating member 194. The first lower insulating member 193 and the second lower insulating member 194 may be installed between the electrode assembly 150 and the cap plate 110.

First ends of separation members 195 and 196 which may be installed to face first side surface of the electrode assembly 150 may be installed between the insulating members 193 and 194 and the cell terminals 130.

The separation members 195 and 196 may include a first separation member 195 and a second separation member 196. The first separation member 195 and the second separation member 196 may be installed to face the electrode assembly 150 between the first lower insulating member 193 and the second lower insulating member 194 and the pair of cell terminals 130.

The pair of cell terminals 130 welded to the first current collector 191 and the second current collector 192 may be coupled to the first lower insulating member 193 and the second lower insulating member 194, and to the first separation member 195 and the second separation member 196.

The case 102 may include a front surface 105 and a rear surface 106 orthogonal to the first direction and spaced apart from each other along the first direction, a pair of side surfaces 107 orthogonal to the second direction and spaced apart from each other along the second direction, and a lower 108 and an upper surface 109 orthogonal to the third direction and spaced apart from each other along the third direction.

In the battery cell 100 of an embodiment, the cell vent 120 is installed on the upper surface 109, and the upper surface 109 may be referred to as a cell vent surface. The pair of cell terminals 130 may be disposed on the cell vent surface 109. The front surface 105, the rear surface 106, the pair of side surfaces 107, the lower surface 108, and the upper surface 109 of the case 102 may be referred to as the front surface 105, the rear surface 106, the pair of side surfaces 107, the lower surface 108, and the upper surface 109 of the battery cell 100. Further, the front surface 105, the rear surface 106, the pair of side surfaces 107, and the lower surface 108 of the case 102 may be referred to as the front surface 105, the rear surface 106, the pair of side surfaces 107, and the lower surface 108 of the case body 103.

The bus bar 20 electrically connects the cell terminal 130 of any battery cell 100 to the cell terminal 130 of another battery cell 100 among the plurality of battery cells 100 included in the battery module 10A.

A plurality of bus bars 20 may be provided. The cell terminal 130 and the bus bar 20 may be, for example, joined by welding. The bus bar 20 may include a metal plate. For example, the bus bar 20 may be manufactured by pressing a metal plate.

The bus bar holder 200 includes a holder body 201 and a first protective member 250. A terminal exposing portion 210 and a holder through hole 215 may be formed in the holder body 201.

The terminal exposing portion 210 exposes the cell terminal 130. In an embodiment, the cell terminal 130 protrudes in the third direction through the terminal exposing portion 210, and the cell terminal 130 may be exposed without being covered by the bus bar holder 200.

The terminal exposing portion 210 may be a through hole passing through a plate portion 202 in a thickness direction. In an embodiment, the terminal exposing portion 210 may be provided in a number corresponding to the total number of cell terminals 130 included in the battery module 10A.

The holder through hole 215 is formed to correspond to the vent hole 115. The vent hole 115 and the holder through hole 215 corresponding to the vent hole 115 may be disposed to be aligned in a thickness direction of the holder body 201. In FIGS. 1 to 8, in an embodiment, the vent hole 115 and the holder through hole 215 corresponding to the vent hole 115 may be located on an imaginary straight line parallel to the third direction. The holder through hole 215 may be provided in a number corresponding to the total number of vent holes 115 included in the battery module 10A.

The bus bar 20 may be supported on the holder body 201. Although not clearly shown in FIGS. 1 to 8, the holder body 201 may include a unit which holds and supports the bus bar 20, for example, a bus bar bracket.

The holder body 201 may include the plate portion 202 and a rib portion 220. For example, the plate portion 202 may be a flat plate-shaped portion having a rectangular planar shape. An outer peripheral edge portion of the plate portion 202 may be coupled to and supported by the pair of side plates 15 or the pair of end plates 12. The terminal exposing portion 210 and the holder through hole 215 may be formed in the plate portion 202.

The rib portion 220 may protrude from the plate portion 202 such that the holder through hole 215 may extend in a thickness direction of the plate portion 202, and extend in a direction away from the case 102. For example, the rib portion 220 may extend upward along the third direction. In an embodiment, a cross-sectional shape of the rib portion 220 may be a closed curve shape corresponding to a planar shape of the holder through hole 215. As the rib portion 220 extends in the thickness direction of the plate portion 202, a length of the holder through hole 215 in the third direction may be greater than a thickness of the plate portion 202.

The first protective member 250 is located between the holder body 201 and the case 102 to face the case 102. The first protective member 250 includes an insulating material having excellent heat resistance. For example, the first protective member 250 may be formed of an insulating material. For example, the insulating material may contain any of mica, aerogel, and a ceramic. In an embodiment, the first protective member 250 may have a property of withstanding, for example, a temperature above 1000°C for at least ten seconds without deformation.

The first protective member 250 may include a first base portion 251 and a first partition portion 260. The first base portion 251 may be interposed between the holder body 201 and the case 102. For example, the first base portion 251 may be interposed between the cell vent surface 109, that is, the upper surface of the case 102, and the plate portion 202 of the holder body 201. Accordingly, the plate portion 202 and the first base portion 251 may overlap in the third direction.

The first partition portion 260 may be bent from the first base portion 251 and extend in a direction away from the case 102. For example, the first partition portion 260 may extend upward along the third direction.

A hollow 254 corresponding to the holder through hole 215 may be formed in the first base portion 251, and the first partition portion 260 may be bent and protrude from an inner circumferential edge of the hollow 254.

In an embodiment, the first partition portion 260 may have a cross-sectional shape of a closed curve such that an inner circumferential surface of the holder through hole 215 is covered. For example, the cross-sectional shape of the first partition portion 260 may be a closed curve shape corresponding to the cross-sectional shape of the rib portion 220.

Accordingly, the first protective member 250 may not close the holder through hole 215, and high-temperature gas and flammable substances discharged through the vent hole 115 while the cell vent 120 is opened may be discharged to the outside of the battery module 10A across the bus bar holder 200 along the holder through hole 215.

The first protective member 250 may be attached to the holder body 201. In an embodiment, for example, the first base portion 251 may be attached to the plate portion 202 via a double-sided adhesive tape. As shown in FIGS. 5 and 6, the first partition portion 260 may be in contact with the rib portion 220. In an embodiment, the first partition portion 260 may be attached to the rib portion 220 via a double-sided adhesive tape like the first base portion 251.

When the bus bar holder 200 is coupled to and supported by the side plate 15 or end plate 12 in a state in which the first protective member 250 is attached to the holder body 201, the first protective member 250 may be brought into close contact with the circumference of the vent hole 115 of the case 102. For example, the first base portion 251 may be brought into close contact with the cell vent surface 109 around the vent hole 115.

Accordingly, a high-temperature gas and flammable substances discharged through the vent hole 115 due to thermal runaway of some battery cells 100 among the plurality of battery cells 100 may not spread to neighboring battery cells 100 through gaps between the cases 102 of the battery cells 100 and the bus bar holder 200. Accordingly, complete burning of the battery module due to serial thermal runaway and a large fire or an explosion due to the complete burning may be prevented or substantially prevented.

In an embodiment, the first protective member 250 may be provided in a number corresponding one-to-one to the number of holder through holes 215. However, unlike the embodiment shown in FIGS. 7 and 8, one first protective member or a plurality of first protective members less than the number of holder through holes may be provided. In this case, the first protective member may include one first base portion and a plurality of first partition portions connected to the first base portion and spaced apart from each other.

In an embodiment, the holder body 201 may include a synthetic resin. For example, the holder body 201 may be an injection-molded product formed by injecting a molten synthetic resin into a mold (not shown) and hardening the molten synthetic resin.

In an embodiment, if the holder body 201 is produced separately from the first protective member 250, as described above, the first protective member 250 may be attached to the holder body 201 via a double-sided adhesive tape, for example.

In another embodiment, the first protective member 250 may be joined to the holder body 201 by insert molding. In an embodiment, the first protective member 250 may be inserted into a mold which molds the holder body 201, the molten synthetic resin may be injected into the mold, and the molten synthetic resin may be hardened in the mold. Through this process, the bus bar holder 200 in which the first protective member 250 is joined to the holder body 201 may be molded. The bus bar holder 200 molded in this way may be taken out of the mold.

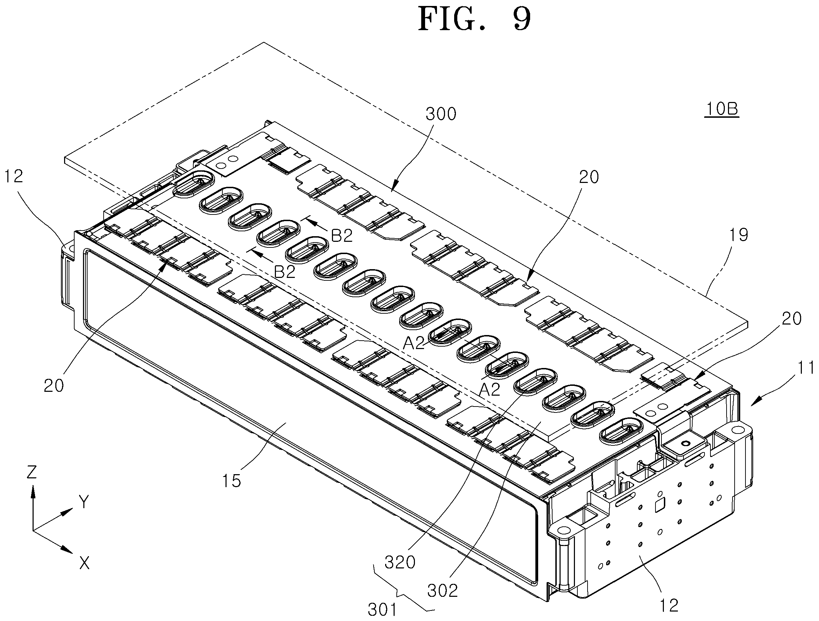

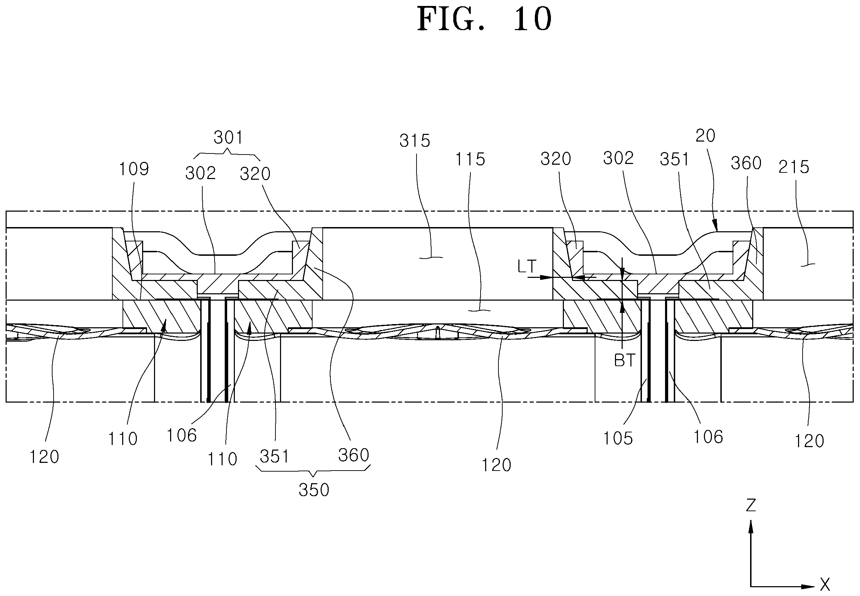

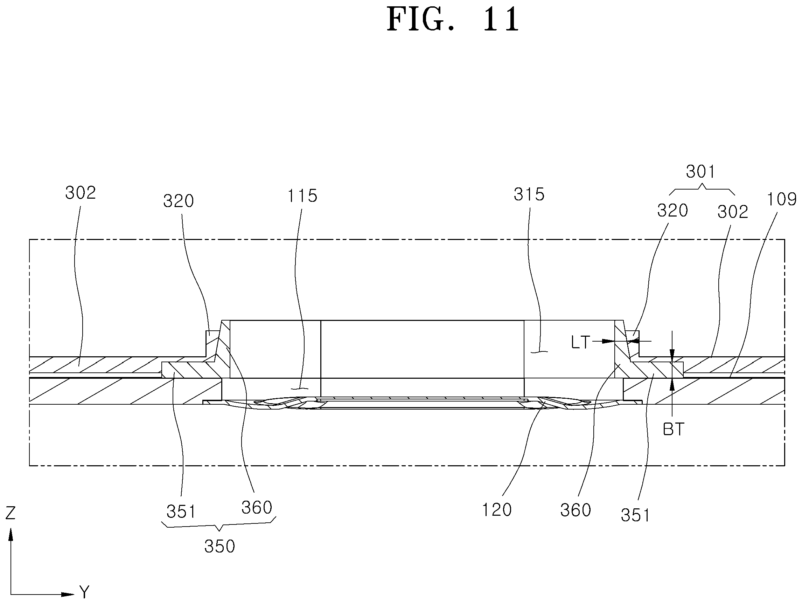

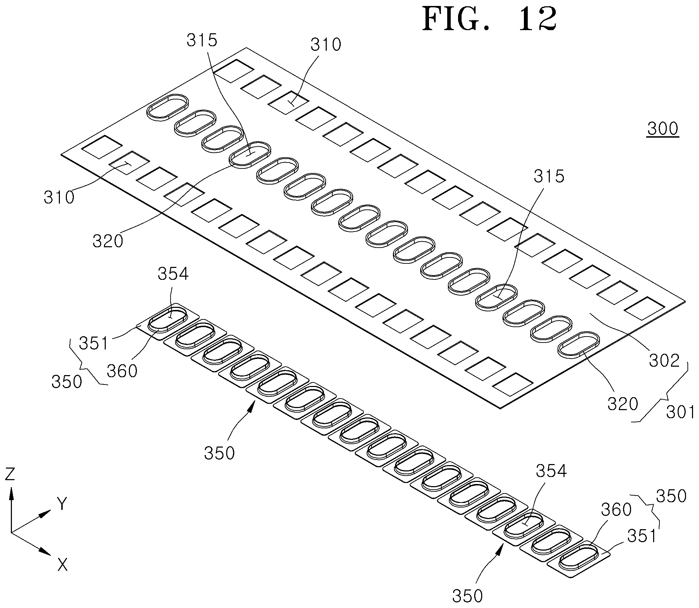

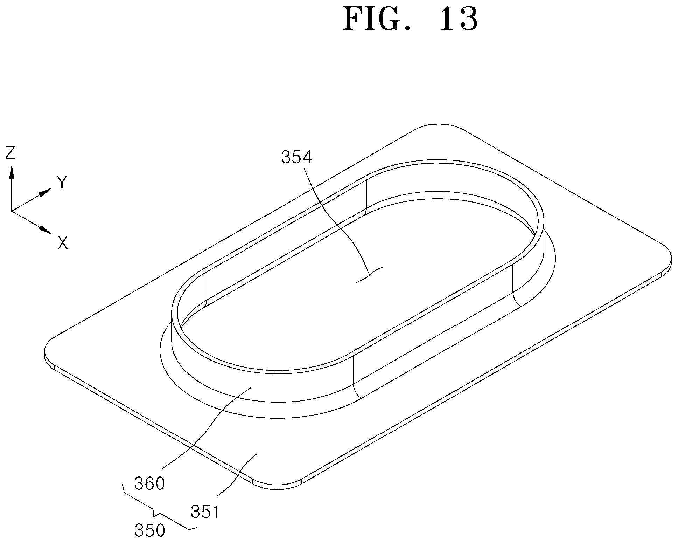

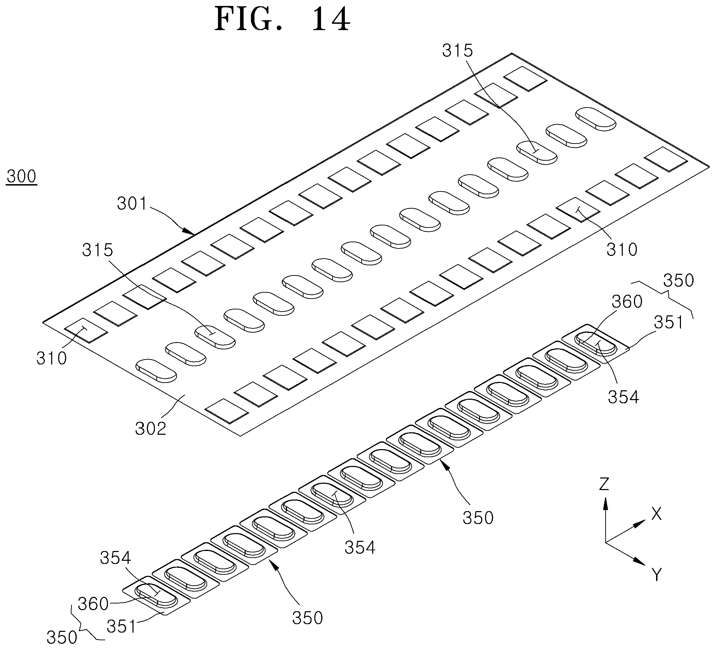

FIG. 9 is a perspective view of a battery module according to another embodiment of the present disclosure; FIG. 10 is a cross-sectional view taken along the line A2-A2 in FIG. 9; FIG. 11 is a cross-sectional view taken along the line B2-B2 in FIG. 9; FIG. 12 is an exploded perspective view illustrating a bus bar holder of FIG. 9 viewed from above; FIG. 13 is an enlarged perspective view illustrating a first protective member of FIG. 12; and FIG. 14 is an exploded perspective view illustrating the bus bar holder of FIG. 9 viewed from below.

Referring to FIGS. 9 to 14, a battery module 10B according to the present embodiment of the present disclosure includes a housing 11, a plurality of battery cells 100 (see FIGS. 2 to 4), a bus bar 20, and a bus bar holder 300. The housing 11, the battery cells 100, and bus bar 20 may be the same as the components of the same names described in the battery module 10A according to the previously described embodiment of the present disclosure, are indicated using the same reference numerals, and overlapping descriptions may be omitted.

The bus bar holder 300 includes a holder body 301 and a first protective member 350. A terminal exposing portion 310 and a holder through hole 315 may be formed in the holder body 301.

The terminal exposing portion 310 exposes a cell terminal 130. In an embodiment, the cell terminal 130 protrudes in the third direction through the terminal exposing portion 310, and the cell terminal 130 may be exposed without being covered by the bus bar holder 300.

The terminal exposing portion 310 may be a through hole passing through a plate portion 302 in a thickness direction. In an embodiment, the terminal exposing portion 310 may be provided in a number corresponding to a total number of cell terminals 130 included in the battery module 10B.

The holder through hole 315 is formed to correspond to a vent hole 115. The vent hole 115 and the holder through hole 315 corresponding to the vent hole 115 may be disposed to be aligned in a thickness direction of the holder body 301. In FIGS. 9 to 14, in an embodiment, the vent hole 115 and the holder through hole 315 corresponding to the vent hole 115 may be located on an imaginary straight line parallel to the third direction. In an embodiment, the holder through hole 315 may be provided in a number corresponding to the total number of vent holes 115 included in the battery module 10B.

The bus bar 20 may be supported on the holder body 301. The holder body 301 may include the plate portion 302 and a rib portion 320. For example, the plate portion 302 may be a flat plate-shaped portion having a rectangular planar shape. An outer peripheral edge portion of the plate portion 302 may be coupled to and supported by a pair of side plates 15 or a pair of end plates 12. The terminal exposing portion 310 and the holder through hole 315 may be formed in the plate portion 302.

The rib portion 320 may protrude from the plate portion 302 such that the holder through hole 315 may extend in a thickness direction of the plate portion 302, and extend in a direction away from the case 102. For example, the rib portion 320 may extend upward along the third direction. In an embodiment, a cross-sectional shape of the rib portion 320 may be a closed curve shape corresponding to a planar shape of the holder through hole 315. As the rib portion 320 extends in the thickness direction of the plate portion 302, a length of the holder through hole 315 in the third direction may be greater than a thickness of the plate portion 302.

The first protective member 350 is located between the holder body 301 and the case 102 to face the case 102. The first protective member 350 includes an insulating material having excellent heat resistance. For example, the first protective member 350 may be formed of an insulating material. For example, the insulating material may contain any of mica, aerogel, and a ceramic. In an embodiment, the first protective member 350 may have a property of withstanding, for example, a temperature above 1000°C for at least ten seconds without deformation.

The first protective member 350 may include a first base portion 351 and a first partition portion 360. The first base portion 351 may be interposed between the holder body 301 and the case 102. For example, the first base portion 351 may be interposed between a cell vent surface 109, that is, an upper surface of the case 102, and the plate portion 302 of the holder body 301. Accordingly, the plate portion 302 and the first base portion 351 may overlap in the third direction.

The first partition portion 360 may be bent from the first base portion 351 and extend in a direction away from the case 102. For example, the first partition portion 360 may extend upward along the third direction.

A hollow 354 corresponding to the holder through hole 315 may be formed in the first base portion 351, and the first partition portion 360 may be bent and protrude from an inner circumferential edge of the hollow 354.

In an embodiment, the first partition portion 360 may have a cross-sectional shape of a closed curve such that an inner circumferential surface of the holder through hole 315 is covered. For example, the cross-sectional shape of the first partition portion 360 may be a closed curve shape corresponding to the cross-sectional shape of the rib portion 320.

Accordingly, the first protective member 350 may not close the holder through hole 315, and high-temperature gas and flammable substances discharged through the vent hole 115 while a cell vent 120 is opened may be discharged to the outside of the battery module 10B across the bus bar holder 200 along the holder through hole 315.

The first protective member 350 may be attached to the holder body 301. In an embodiment, for example, the first base portion 351 may be attached to the plate portion 302 via a double-sided adhesive tape. As shown in FIGS. 10 and 11, the first partition portion 360 may be in contact with the rib portion 320. In an embodiment, the first partition portion 360 may be attached to the rib portion 320 via a double-sided adhesive tape like the first base portion 351.

When the bus bar holder 300 is coupled to and supported by the side plate 15 or end plate 12 in a state in which the first protective member 350 is attached to the holder body 301, the first protective member 350 may be brought into close contact with the circumference of the vent hole 115 of the case 102. For example, the first base portion 351 may be brought into close contact with the cell vent surface 109 around the vent hole 115.

Accordingly, a high-temperature gas and the flammable substances discharged through the vent hole 115 due to thermal runaway of some battery cells 100 among the plurality of battery cells 100 may not spread to neighboring battery cells 100 through gaps between the cases 102 of the battery cells 100 and the bus bar holder 300. Accordingly, complete burning of the battery module due to serial thermal runaway and a large fire or an explosion due to the complete burning may be prevented or substantially prevented.

A thickness BT of the first base portion 351 may be thicker than a thickness LT of the first partition portion 360. In an embodiment, the first base portion 351 located close to the vent hole 115 is formed to be thicker, and thermal deformation of the first protective member 350 and the holder body 301 may be reliably suppressed despite a high-temperature gas and flammable substances discharged through the vent hole 115.

In an embodiment, the thickness LT of the first partition portion 360 may become thinner as it gets farther away from the vent hole 115. Accordingly, a consumption amount of the insulating material of the first protective member 350 is reduced, and production costs may be reduced.

The temperature of the gas and the flammable substances discharged from the vent hole 115 decreases due to heat exchange with the surroundings, and the thermal deformation of the first protective member 350 and the holder body 301 may be reliably suppressed even when the thickness LT of the first partition portion 360 becomes thinner farther away from the vent hole 115

In an embodiment, the first protective member 350 may be provided in a number corresponding one-to-one to the number of holder through holes 315. However, unlike the embodiment shown in FIGS. 12 and 14, one first protective member or a plurality of first protective members less than the number of holder through holes may be provided. In an embodiment, the first protective member may include one first base portion and a plurality of first partition portions connected to the first base portion and spaced apart from each other.

In an embodiment, the holder body 301 may include a synthetic resin. For example, the holder body 301 may be an injection-molded product formed by injecting a molten synthetic resin into a mold (not shown) and hardening the molten synthetic resin.

In an embodiment, if the holder body 301 is produced separately from the first protective member 350, as described above, the first protective member 350 may be attached to the holder body 301 via a double-sided adhesive tape.

In another embodiment, the first protective member 350 may be joined to the holder body 301 by insert molding. In further detail, the first protective member 350 may be inserted into a mold which molds the holder body 301, the molten synthetic resin may be injected into the mold, and the molten synthetic resin may be hardened in the mold. Through this process, the bus bar holder 300 in which the first protective member 350 is joined to the holder body 301 may be molded. The bus bar holder 300 molded in this way may be taken out of the mold.

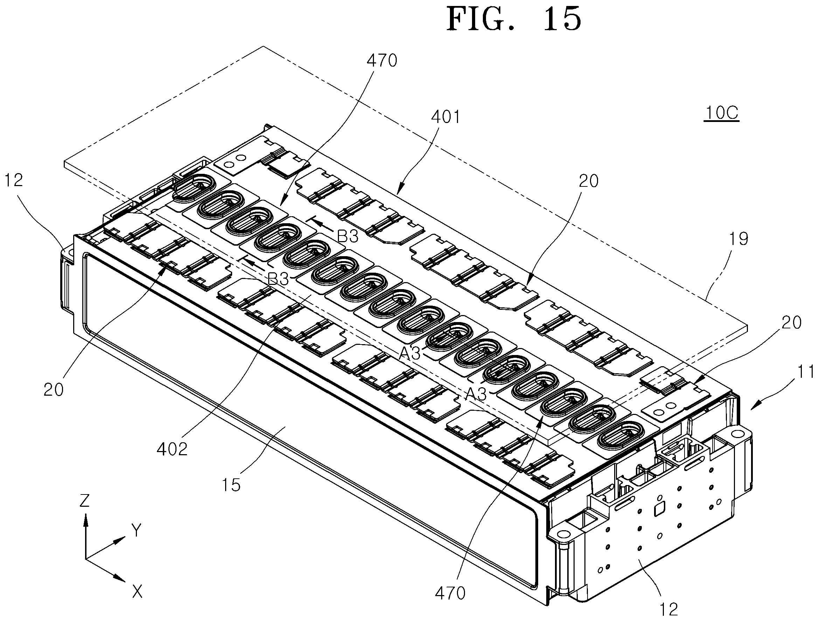

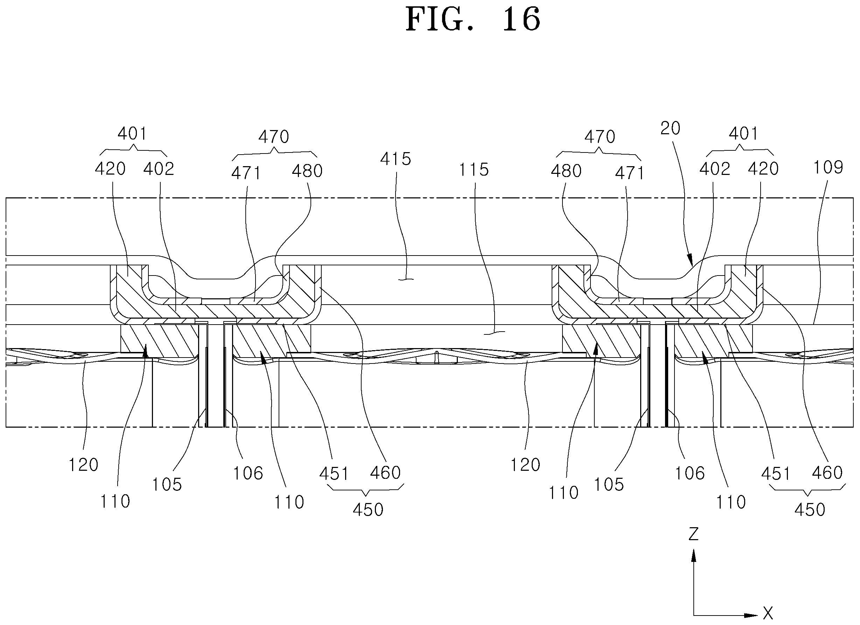

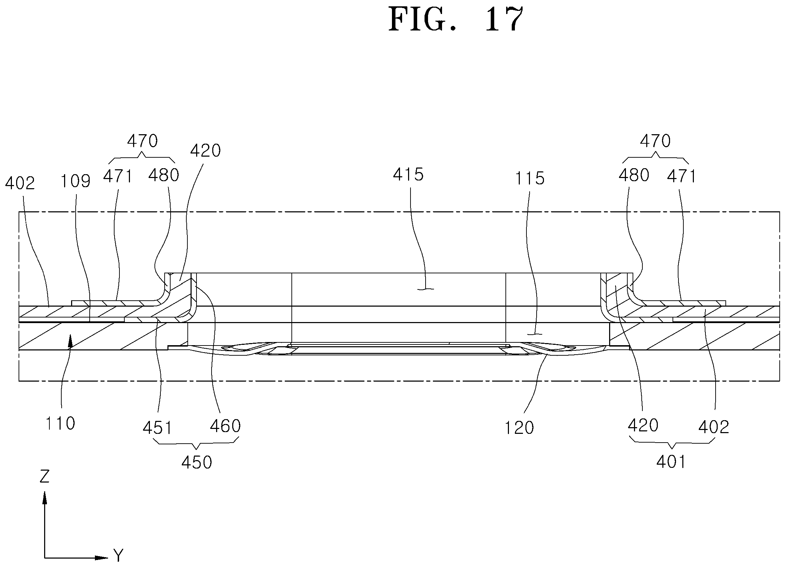

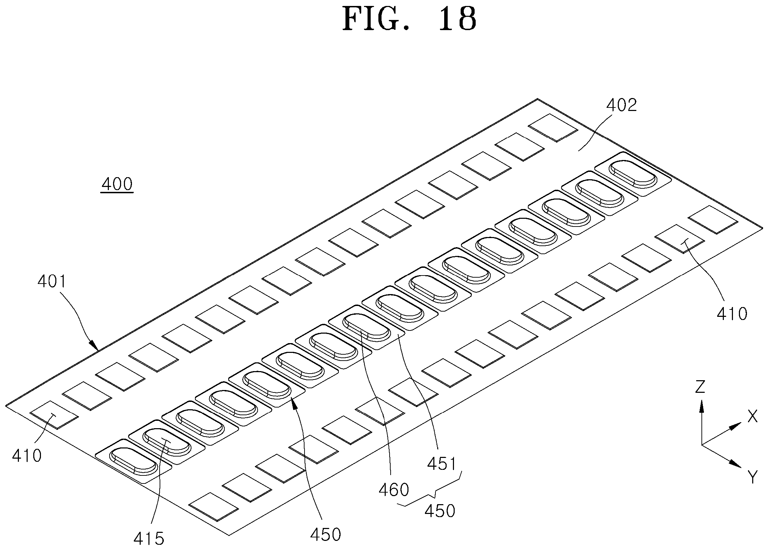

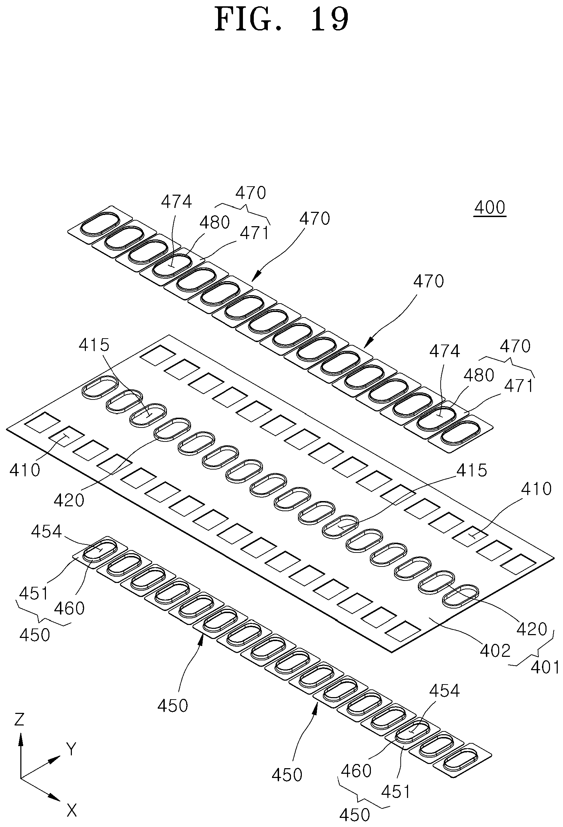

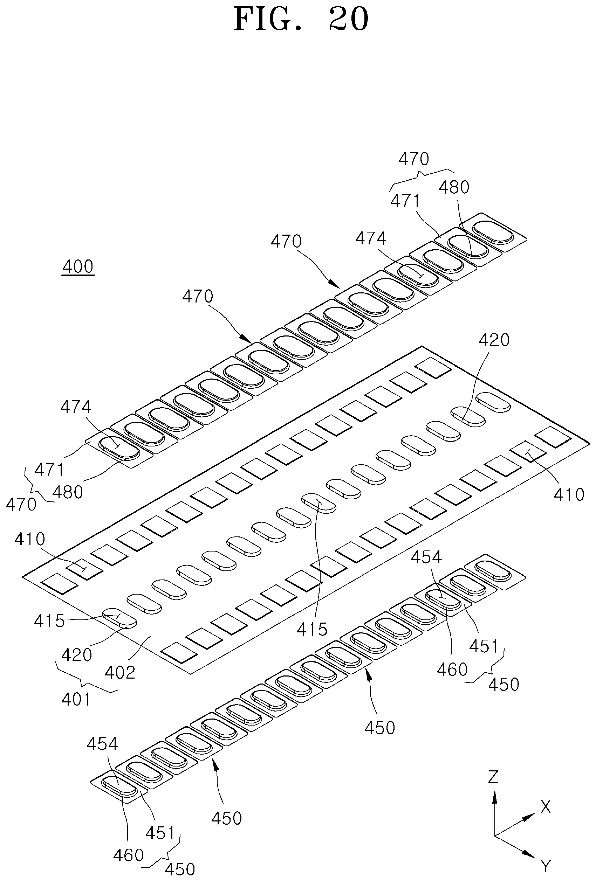

FIG. 15 is a perspective view of a battery module according to another embodiment of the present disclosure; FIG. 16 is a cross-sectional view taken along the line A3-A3 in FIG. 15; FIG. 17 is a cross-sectional view taken along the line B3-B3 in FIG. 15; FIG. 18 is a perspective view illustrating a bus bar holder of FIG. 15 viewed from below; FIG. 19 is an exploded perspective view illustrating the bus bar holder of FIG. 15 viewed from above; and FIG. 20 is an exploded perspective view illustrating the bus bar holder of FIG. 15 viewed from below.

Referring to FIGS. 15 to 20, a battery module 10C according to the present embodiment of the present disclosure includes a housing 11, a plurality of battery cells 100 (see FIGS. 2 to 4), a bus bar 20, and a bus bar holder 400. The housing 11, the battery cells 100, and bus bar 20 may be the same as the components of the same names described in the battery module 10A according to the previously described embodiment of the present disclosure, are indicated using the same reference numerals, and overlapping descriptions may be be omitted.

The bus bar holder 400 includes a holder body 401 and a first protective member 450 and a second protective member 470. A terminal exposing portion 410 and a holder through hole 415 may be formed in the holder body 201.

The terminal exposing portion 410 exposes the cell terminal 130. In an embodiment, the cell terminal 130 protrudes in the third direction through the terminal exposing portion 410, and the cell terminal 130 may be exposed without being covered by the bus bar holder 400.

The terminal exposing portion 410 may be a through hole passing through a plate portion 402 in a thickness direction. In an embodiment, the terminal exposing portion 410 may be provided in a number corresponding to a total number of cell terminals 130 included in the battery module 10C.

The holder through hole 415 is formed to correspond to a vent hole 115. The vent hole 115 and the holder through hole 415 corresponding to the vent hole 115 may be disposed to be aligned in a thickness direction of the holder body 201. In FIGS. 15 to 20, in an embodiment, the vent hole 115 and the holder through hole 415 corresponding to the vent hole 115 may be located on an imaginary straight line parallel to the third direction. In an embodiment, the holder through hole 415 may be provided in a number corresponding to the total number of vent holes 115 included in the battery module 10C.

The bus bar 20 may be supported on the holder body 401. The holder body 401 may include the plate portion 402 and a rib portion 420. For example, the plate portion 402 may be a flat plate-shaped portion having a rectangular planar shape. An outer peripheral edge portion of the plate portion 402 may be coupled to and supported by a pair of side plates 15 or a pair of end plates 12. The terminal exposing portion 410 and the holder through hole 415 may be formed in the plate portion 402.

The rib portion 420 may protrude from the plate portion 402 such that the holder through hole 415 may extend in a thickness direction of the plate portion 402, and extend in a direction away from the case 102. For example, the rib portion 420 may extend upward along the third direction. In an embodiment, a cross-sectional shape of the rib portion 420 may be a closed curve shape corresponding to a planar shape of the holder through hole 415. As the rib portion 420 extends in the thickness direction of the plate portion 402, a length of the holder through hole 415 in the third direction may be greater than a thickness of the plate portion 402.

The first protective member 450 is located between the holder body 401 and the case 102 to face the case 102. The first protective member 450 includes an insulating material having excellent heat resistance. For example, the first protective member 450 may be formed of an insulating material. For example, the insulating material may contain any of mica, aerogel, and a ceramic. In an embodiment, the first protective member 450 may have a property of withstanding, for example, a temperature above 1000°C for at least ten seconds without deformation.

The first protective member 450 may include a first base portion 451 and a first partition portion 460. The first base portion 451 may be interposed between the holder body 401 and the case 102. For example, the first base portion 451 may be interposed between a cell vent surface 109, that is, an upper surface of the case 102, and the plate portion 402 of the holder body 401. Accordingly, the plate portion 402 and the first base portion 451 may overlap in the third direction.

The first partition portion 460 may be bent from the first base portion 451 and extend in a direction away from the case 102. For example, the first partition portion 460 may extend upward along the third direction.

A hollow 454 corresponding to the holder through hole 415 may be formed in the first base portion 451, and the first partition portion 460 may be bent and protrude from an inner circumferential edge of the hollow 454.

In an embodiment, the first partition portion 460 may have a cross-sectional shape of a closed curve such that an inner circumferential surface of the holder through hole 415 is covered. For example, the cross-sectional shape of the first partition portion 460 may be a closed curve shape corresponding to the cross-sectional shape of the rib portion 420.

Accordingly, the first protective member 450 may not close the holder through hole 415, and high-temperature gas and flammable substances discharged through the vent hole 115 while a cell vent 120 is opened may be discharged to the outside of the battery module 10C across the bus bar holder 400 along the holder through hole 415.

The first protective member 450 may be attached to the holder body 401. For example, the first base portion 451 may be attached to the plate portion 402 via a double-sided adhesive tape. As shown in FIGS. 16 and 17, the first partition portion 460 may be in contact with the rib portion 420. In an embodiment, the first partition portion 460 may be attached to the rib portion 420 via a double-sided adhesive tape like the first base portion 451.

When the bus bar holder 400 is coupled to and supported by the side plate 15 or end plate 12 in a state in which the first protective member 450 is attached to the holder body 401, the first protective member 450 may be brought into close contact with the circumference of the vent hole 115 of the case 102. For example, the first base portion 451 may be brought into close contact with the cell vent surface 109 around the vent hole 115.

Accordingly, high-temperature gas and flammable substances discharged through the vent hole 115 due to thermal runaway of some battery cells 100 among the plurality of battery cells 100 may not spread to neighboring battery cells 100 through gaps between the cases 102 of the battery cells 100 and the bus bar holder 400. Accordingly, complete burning of the battery module due to serial thermal runaway and a large fire or an explosion due to the complete burning may be prevented or substantially prevented.

In an embodiment, the first protective member 450 may be provided in a number corresponding one-to-one to the number of holder through holes 415. However, unlike the embodiment shown in FIGS. 18 to 20, one first protective member or a plurality of first protective members less than the number of holder through holes may be provided. In an embodiment, the first protective member may include one first base portion and a plurality of first partition portions connected to the first base portion and spaced apart from each other.

The second protective member 470 may be located at an opposite side of the first protective member 450 with the holder body 401 therebetween. The second protective member 470 includes an insulating material having excellent heat resistance. For example, the second protective member 470 may be formed of an insulating material. For example, the insulating material may contain any of mica, aerogel, and a ceramic. In an embodiment, the second protective member 470 may have a property of withstanding, for example, a temperature above 1000°C for at least ten seconds without deformation.

The second protective member 470 may include a second base portion 471 and a second partition portion 480. The second base portion 471 may overlap the plate portion 402 and may be attached to the plate portion 402. The second partition portion 480 may be bent from the second base portion 471 and extend in a direction away from the case 102. For example, the second partition portion 480 may extend upward along the third direction.

A hollow 474 corresponding to the holder through hole 415 may be formed in the second base portion 471, and the second partition portion 480 may be bent and protrude from an inner circumferential edge of the hollow 474. In an embodiment, the second partition portion 480 may have a cross-sectional shape of a closed curve to surround the rib portion 420. For example, the cross-sectional shape of the second partition portion 480 may be a closed curve shape corresponding to the cross-sectional shape of the rib portion 420. Accordingly, the second protective member 470 may not close the holder through hole 415.

The second protective member 470 may be attached to the holder body 401. For example, the second base portion 471 may be attached to the plate portion 402 via a double-sided adhesive tape. As shown in FIGS. 16 and 17, the second partition portion 480 may be in contact with the rib portion 420. In an embodiment, the second partition portion 480 may be attached to the rib portion 420 via a double-sided adhesive tape like the second base portion 471.

In an embodiment, the second protective member 470 may be provided in a number corresponding one-to-one to the number of holder through holes 415. However, unlike the embodiment shown in FIGS. 18 to 20, one second protective member or a plurality of second protective members less than the number of holder through holes may be provided. In an embodiment, the second protective member may include one second base portion and a plurality of second partition portions connected to the second base portion and spaced apart from each other.

In an embodiment, the holder body 401 may include a synthetic resin. For example, the holder body 401 may be an injection-molded product formed by injecting a molten synthetic resin into a mold (not shown) and hardening the molten synthetic resin.

In an embodiment, if the holder body 401 is produced separately from the first protective member 450 and the second protective member 470, as described above, the first protective member 450 and the second protective member 470 may be attached to the holder body 401 via a double-sided adhesive tape.

In another embodiment, the first protective member 450 and the second protective member 470 may be joined to the holder body 401 by insert molding. In further detail, the first protective member 450 and the second protective member 470 may be inserted into a mold which molds the holder body 401, the molten synthetic resin may be injected into the mold, and the molten synthetic resin may be hardened in the mold. Through this process, the bus bar holder 400 in which the first protective member 450 and the second protective member 470 are joined to the holder body 401 may be molded. The bus bar holder 400 molded in this way may be taken out of the mold.

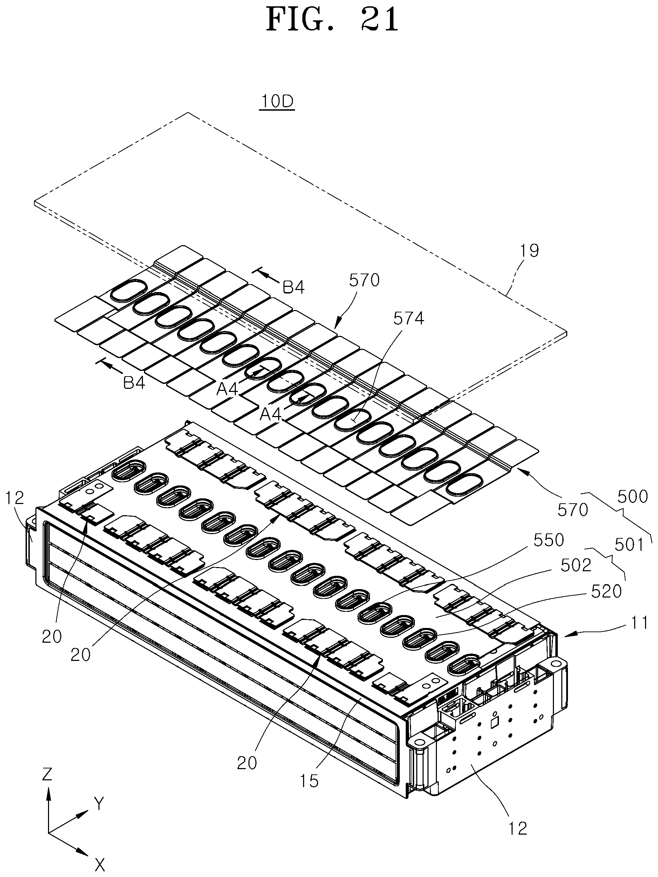

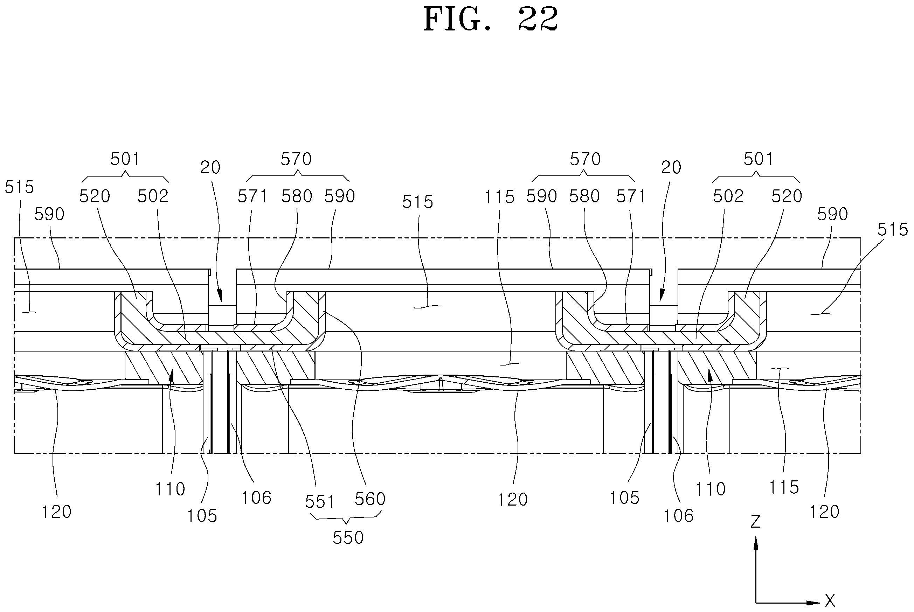

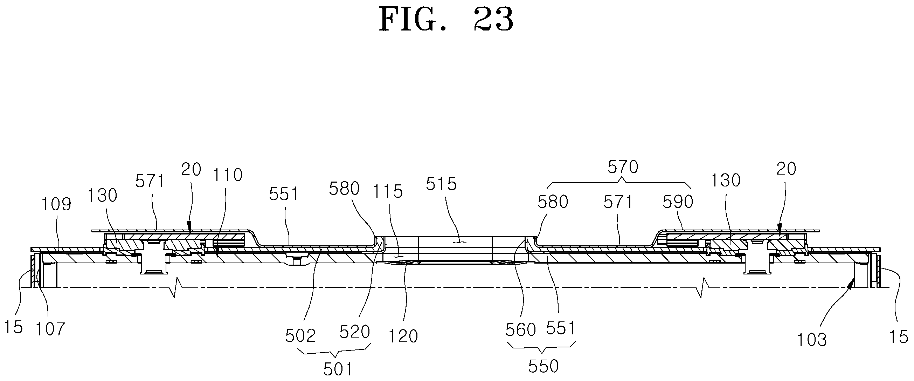

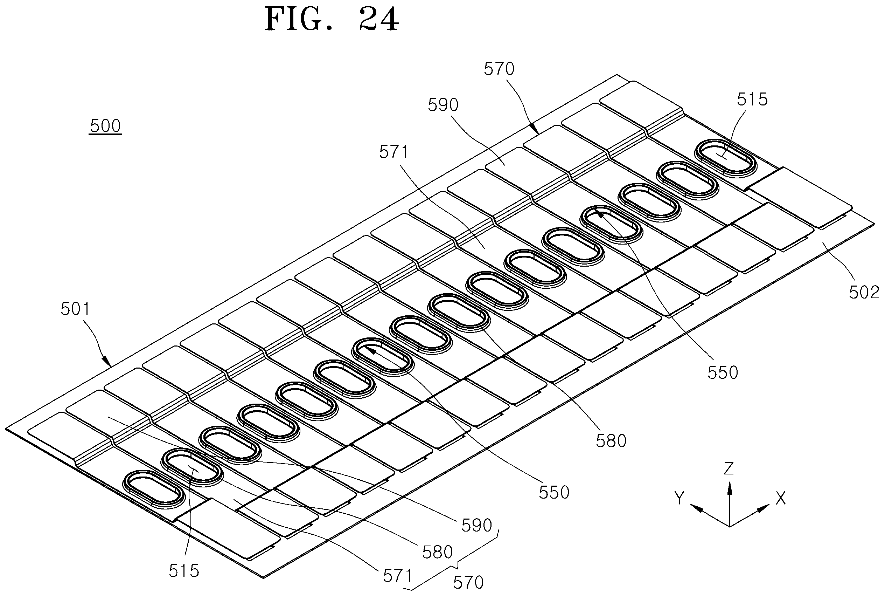

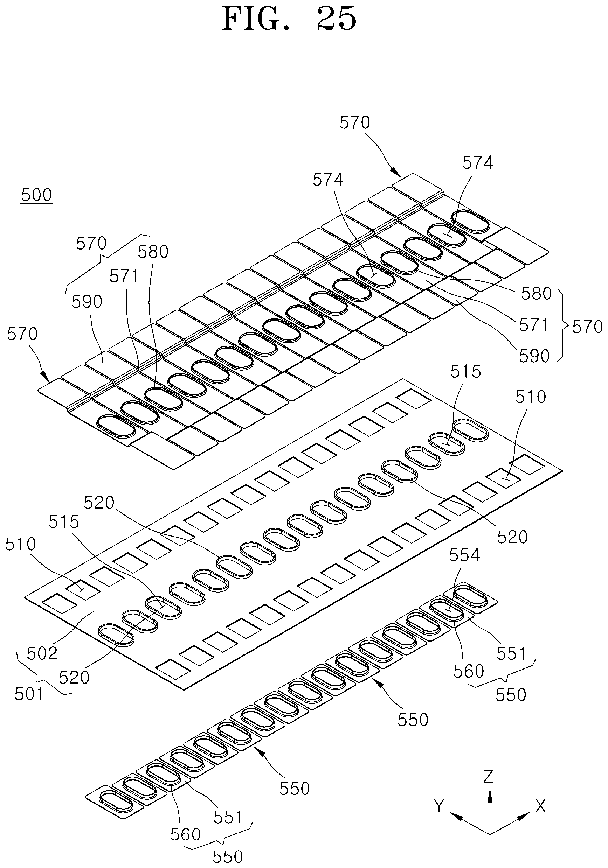

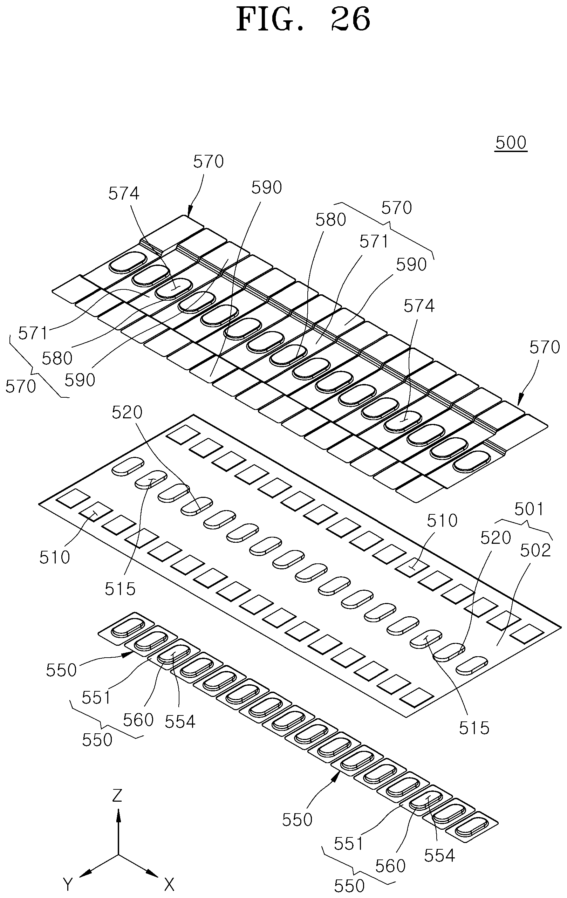

FIG. 21 is a perspective view of a battery module according to another embodiment of the present disclosure, and is a view illustrating that a second protective member is separated from a holder body; FIG. 22 is a cross-sectional view taken along the line A4-A4 in FIG. 21; FIG. 23 is a cross-sectional view taken along line B4-B4 in FIG. 21; FIG. 24 is a perspective view of a bus bar holder of FIG. 21 viewed from above, and is a view illustrating that a second protective member is attached to a holder body; FIG. 25 is an exploded perspective view illustrating the bus bar holder of FIG. 21 viewed from above; and FIG. 26 is an exploded perspective view illustrating the bus bar holder of FIG. 21 viewed from below.

Referring to FIGS. 21 to 26, a battery module 10D according to the present embodiment of the present disclosure includes a housing 11, a plurality of battery cells 100 (see FIGS. 2 to 4), a bus bar 20, and a bus bar holder 500. The housing 11, the battery cells 100, and bus bar 20 may be the same as the components of the same names described in the battery module 10A according to the previously described embodiment of the present disclosure, are indicated using the same reference numerals, and overlapping descriptions may be omitted.

The bus bar holder 500 includes a holder body 501, a first protective member 550, and a second protective member 570. A terminal exposing portion 510 and a holder through hole 515 may be formed in the holder body 501.

The terminal exposing portion 510 exposes a cell terminal 130. In an embodiment, the cell terminal 130 protrudes in the third direction through the terminal exposing portion 510, and the cell terminal 130 may be exposed without being covered by the bus bar holder 500.

The terminal exposing portion 510 may be a through hole passing through a plate portion 502 in a thickness direction. In an embodiment, the terminal exposing portion 510 may be provided in a number corresponding to the total number of cell terminals 130 included in the battery module 10D.

The holder through hole 515 is formed to correspond to a vent hole 115. The vent hole 115 and the holder through hole 515 corresponding to the vent hole 115 may be disposed to be aligned in a thickness direction of the holder body 501. In FIGS. 21 to 26, in an embodiment, the vent hole 115 and the holder through hole 515 corresponding to the vent hole 115 may be located on an imaginary straight line parallel to the third direction. In an embodiment, the holder through hole 515 may be provided in a number corresponding to the total number of vent holes 115 included in the battery module 10D.

The bus bar 20 may be supported on the holder body 501. The holder body 501 may include the plate portion 502 and a rib portion 520. For example, the plate portion 502 may be a flat plate-shaped portion having a rectangular planar shape. An outer peripheral edge portion of the plate portion 502 may be coupled to and supported by a pair of side plates 15 or a pair of end plates 12. The terminal exposing portion 510 and the holder through hole 515 may be formed in the plate portion 502.

The rib portion 520 may protrude from the plate portion 502 such that the holder through hole 515 may extend in a thickness direction of the plate portion 502, and extend in a direction away from the case 102. For example, the rib portion 520 may extend upward along the third direction. In an embodiment, a cross-sectional shape of the rib portion 520 may be a closed curve shape corresponding to a planar shape of the holder through hole 515. As the rib portion 520 extends in the thickness direction of the plate portion 502, a length of the holder through hole 515 in the third direction may be greater than a thickness of the plate portion 502.

The first protective member 550 is located between the holder body 501 and the case 102 to face the case 102. The first protective member 550 includes an insulating material having excellent heat resistance. For example, the first protective member 550 may be formed of an insulating material. For example, the insulating material may contain any of mica, aerogel, and a ceramic. In an embodiment, the first protective member 550 may have, for example, a property of withstanding a temperature above 1000°C for at least ten seconds without deformation.

The first protective member 550 may include a first base portion 551 and a first partition portion 560. The first base portion 551 may be interposed between the holder body 501 and the case 102. For example, the first base portion 551 may be interposed between a cell vent surface 109, that is, an upper surface of the case 102, and the plate portion 502 of the holder body 501. Accordingly, the plate portion 502 and the first base portion 551 may overlap in the third direction.

The first partition portion 560 may be bent from the first base portion 551 and extend in a direction away from the case 102. For example, the first partition portion 560 may extend upward along the third direction.

A hollow 554 corresponding to the holder through hole 515 may be formed in the first base portion 551, and the first partition portion 560 may be bent and protrude from an inner circumferential edge of the hollow 554.

In an embodiment, the first partition portion 560 may have a cross-sectional shape of a closed curve such that an inner circumferential surface of the holder through hole 515 is covered. For example, the cross-sectional shape of the first partition portion 560 may be a closed curve shape corresponding to the cross-sectional shape of the rib portion 520.

Accordingly, the first protective member 550 may not close the holder through hole 515, and high-temperature gas and flammable substances discharged through the vent hole 115 while a cell vent 120 is opened may be discharged to the outside of the battery module 10D across the bus bar holder 500 along the holder through hole 515.

The first protective member 550 may be attached to the holder body 501. For example, the first base portion 551 may be attached to the plate portion 502 via a double-sided adhesive tape. As shown in FIGS. 22 and 23, the first partition portion 560 may be in contact with the rib portion 520. In an embodiment, the first partition portion 560 may be attached to the rib portion 520 via a double-sided adhesive tape like the first base portion 551.

When the bus bar holder 500 is coupled to and supported by the side plate 15 or end plate 12 in a state in which the first protective member 550 is attached to the holder body 501, the first protective member 550 may be brought into close contact with the circumference of the vent hole 115 of the case 102. For example, the first base portion 551 may be brought into close contact with the cell vent surface 109 around the vent hole 115.

Accordingly, high-temperature gas and flammable substances discharged through the vent hole 115 due to thermal runaway of some battery cells 100 among the plurality of battery cells 100 may not spread to neighboring battery cells 100 through gaps between the cases 102 of the battery cells 100 and the bus bar holder 500. Accordingly, complete burning of the battery module due to serial thermal runaway and a large fire or an explosion due to the complete burning may be prevented or substantially prevented.

In an embodiment, the first protective member 550 may be provided in a number corresponding one-to-one to the number of holder through holes 515. However, unlike the embodiment shown in FIGS. 25 and 26, one first protective member or a plurality of first protective members less than the number of holder through holes may be provided. In an embodiment, the first protective member may include one first base portion and a plurality of first partition portions connected to the first base portion and spaced apart from each other.

The second protective member 570 may be located at an opposite side of the first protective member 550 with the holder body 501 therebetween. The second protective member 570 includes an insulating material having excellent heat resistance. For example, the second protective member 570 may be formed of an insulating material. For example, the insulating material may contain any of mica, aerogel, and a ceramic. In an embodiment, the second protective member 570 may have a property of withstanding, for example, a temperature above 1000°C for at least ten seconds without deformation.

The second protective member 570 may include a second base portion 571 and a second partition portion 580. The second base portion 571 may overlap the plate portion 502 and may be attached to the plate portion 502. The second partition portion 580 may be bent from the second base portion 571 and extend in a direction away from the case 102. For example, the second partition portion 580 may extend upward along the third direction.

A hollow 574 corresponding to the holder through hole 515 may be formed in the second base portion 571, and the second partition portion 580 may be bent and protrude from an inner circumferential edge of the hollow 574. In an embodiment, the second partition portion 580 may have a cross-sectional shape of a closed curve to surround the rib portion 520. For example, the cross-sectional shape of the second partition portion 580 may be a closed curve shape corresponding to the cross-sectional shape of the rib portion 520. Accordingly, the second protective member 570 may not close the holder through hole 515.

The second protective member 570 may further include a wing portion 590 which is connected to the second base portion 571 and covers the bus bar 20. In an embodiment, a pair of wing portions 590 may be provided. The second protective member 570 may extend in the second direction, and the pair of wing portions 590 may be disposed one-to-one at both, or opposite, end portions of the second protective member 570 in a longitudinal direction.

The pair of wing portions 590 belonging to one second protective member 570 may cover the bus bar 20 coupled to a positive electrode cell terminal 130 of one battery cell 100 and the bus bar 20 coupled to a negative electrode cell terminal 130.

The wing portion 590 may be spaced apart from the holder body 501. For example, the wing portion 590 may be spaced apart from the plate portion 502 in a thickness direction of the plate portion 502. Even if the high-temperature gas and the flammable substances discharged from the vent holes 115 of some battery cells 100 pass through the holder through hole 515 and are discharged to the outside of the battery module 10D and then fall to the bus bar holder 500 due to gravity, since the wing portion 590 covers the bus bar 20, electrical damage to the bus bar 20 or electronic elements such as sensors connected to the bus bar 20 may be suppressed. Accordingly, a spark due to a short circuit of the bus bar 20 or the electronic elements and a fire or an explosion due to the spark may be reliably suppressed or delayed.

The second protective member 570 may be attached to the holder body 501. For example, the second base portion 571 may be attached to the plate portion 502 via a double-sided adhesive tape. As shown in FIGS. 22 and 23, the second partition portion 580 may be in contact with the rib portion 520. In an embodiment, the second partition portion 580 may be attached to the rib portion 520 via a double-sided adhesive tape like the second base portion 571.

When the battery module 10D is assembled, a semi-finished bus bar holder product in which the first protective member 550 is coupled to the holder body 501 may be placed on the plurality of battery cells 100 such that the cell terminal 130 passes through the terminal exposing portion 510, the bus bar 20 and the cell terminal 130 may be, for example, joined by a method such as welding, and then the second protective member 570 may be attached to the holder body 501.

In an embodiment, the holder body 501 may include a synthetic resin. For example, the holder body 501 may be an injection-molded product formed by injecting a molten synthetic resin into a mold and hardening the molten synthetic resin.

In an embodiment, if the holder body 501 is produced separately from the first protective member 550 and the second protective member 570, as described above, the first protective member 550 and the second protective member 570 may be attached to the holder body 501 via a double-sided adhesive tape.

In another embodiment, the first protective member 550 may be joined to the holder body 501 by insert molding. In further detail the first protective member 550 may be inserted into a mold which molds the holder body 501, the molten synthetic resin may be injected into a mold, and the molten synthetic resin may be hardened in the mold. Through this process, a semi-finished bus bar holder 500 product in which the first protective member 550 is joined to the holder body 501 may be molded. The semi-finished bus bar holder 500 product molded in this way may be taken out of the mold.

According to embodiments of the present disclosure, a circumferential portion of a holder through hole of a bus bar holder is covered by a first protective member including an insulating material, and high-temperature gas and flammable substances discharged from vent holes of battery cells can be discharged to the outside of a battery module through the vent holes without directly hitting a holder body of the bus bar holder.

Accordingly, deformation and damage of the holder body due to high heat can be suppressed, a short circuit of bus bars or electronic elements disposed in the holder body and a spark due to such a short circuit can be suppressed or delayed from occurring, and a large fire or an explosion can be prevented or substantially prevented.

According to embodiments of the present disclosure, a first protective member is brought into close contact with a circumferential portion of a vent hole of a case, and high-temperature gas and flammable substances discharged from the vent hole due to thermal runaway of some battery cells may not spread to neighboring battery cells through gaps between the battery cells and the bus bar holder. Accordingly, complete burning of the battery module due to serial thermal runaway and a large fire or an explosion due to the complete burning can be prevented or substantially prevented.

However, aspects and features of the present invention are not limited to those described above and other aspects and features not mentioned will be clearly understood by those skilled in the art from the detailed description given above.

Although the present invention has been described with reference to some embodiments and drawings illustrating aspects thereof, the present invention is not limited thereto. Various modifications and variations can be made by a person skilled in the art to which the present invention belongs within the scope of the technical spirit of the invention and the claims and equivalents thereto.

## Claims

1. A battery module comprising:
a housing;
a plurality of battery cells accommodated in the housing and each comprising a case including a vent hole and a cell terminal protruding from the case;
a bus bar electrically connecting the cell terminal of a battery cell of the plurality of battery cells and the cell terminal of another battery cell of the plurality of battery cells; and
a bus bar holder comprising a holder body that supports the bus bar and includes a holder through hole corresponding to the vent hole, and a first protective member comprising an insulating material and located between the holder body and the case to face the case.

2. The battery module as claimed in claim 1, wherein the first protective member is attached to the holder body.

3. The battery module as claimed in claim 1 or claim 2, wherein the first protective member is in close contact with a circumference of the vent hole of the case.

4. The battery module as claimed in any preceding claim, wherein the vent hole and the holder through hole corresponding to the vent hole are aligned in a thickness direction of the holder body.

5. The battery module as claimed in any preceding claim, wherein the insulating material comprises any of mica, aerogel, and a ceramic.

6. The battery module as claimed in any preceding claim, wherein the first protective member does not close the holder through hole.

7. The battery module as claimed in claim 6, wherein the first protective member comprises:
a first base portion between the holder body and the case; and
a first partition portion bent from the first base portion and extending in a direction away from the case, and having a cross-sectional shape of a closed curve such that an inner circumferential surface of the holder through hole is covered.

8. The battery module as claimed in claim 7, wherein the holder body comprises:
a plate portion overlapping the first base portion; and
a rib portion protruding from the plate portion such that the holder through hole extends in a thickness direction of the plate portion, and extending in a direction away from the case.

9. The battery module as claimed in claim 8, wherein the first partition portion is in contact with the rib portion.

10. The battery module as claimed in claim 8 or claim 9, further comprising a second protective member comprising an insulating material and located at an opposite side of the first protective member with the holder body therebetween.

11. The battery module as claimed in claim 10, wherein the second protective member comprises a second base portion overlapping the plate portion and attached to the plate portion.

12. The battery module as claimed in claim 11, wherein the second protective member further comprises a second partition portion bent from the second base portion to extend in a direction away from the case, and having a closed curve cross-sectional shape to surround the rib portion.

13. The battery module as claimed in claim 11 or claim 12, wherein the second protective member further comprises a wing portion that is connected to the second base portion and covers the bus bar.

14. The battery module as claimed in claim 13, wherein the wing portion is spaced apart from the holder body.

15. The battery module as claimed in any preceding claim, wherein the holder body comprises a synthetic resin.
